# EUROPEAN PATENT APPLICATION

(11) **EP 3 266 686 A1**
(43) Date of publication of application: **10.01.2018**
(21) Application number: 15884032.2
(22) Date of filing: 16.12.2015
(51) Int. Cl.: B62D 25/04

(54) **VEHICULAR FRONT PILLAR**

(30) Priority: 02.03.2015 JP 2015040788
(71) Applicant: Toyoda Iron Works Co., Ltd., Toyota-shi Aichi 471-8507 (JP)
(72) Inventor: KITAGUCHI Kazuaki, Toyota-shi Aichi 471-8507 (JP); KATO Akiyoshi, Toyota-shi Aichi 471-8507 (JP)
(74) Representative: Wills, Andrew Jonathan
(86) International application number: PCT/JP2015/085292
(87) International publication number: WO 2016/139866

(57) **Abstract**

A front pillar with an improved driver vision and an improved strength of the junction where the pillar is joined to the vehicle body as compared with conventional front pillars. The inward flange 14c of the front pillar outer member 14 is overlapped and joined to the outward flange 20c of the front pillar inner rear member 20, forming a closed cross section of the front pillar 10. The front pillar 10 has a thin width as compared with the case where the inward flange directed laterally inward in the vehicle is used instead of an outward flange of the front pillar inner member. The inward flange 18c of the roof inner reinforcement 18 is overlapped and joined to the inward flange 14c of the front pillar outer member 14. Therefore, when another part of the vehicle body is joined to the overlap of the inward flange 18c and the inward flange 14c, the junction of the front pillar 10 and the other part of the vehicle body has an improved strength as compared with conventional front pillars.

## Description

### TECHNICAL FIELD

The present invention relates to the art of front pillars of a vehicle, which are parts of the vehicle body, that reduces the width of the front pillar to improve the driver vision and improving the bending strength.

### BACKGROUND ART

A front pillar of a vehicle is known that includes a front pillar outer member, which is an outer part of the vehicle body, and a front pillar inner member, which is an inner part of the vehicle body, together forming a closed cross section of the front pillar in the entire length, wherein the length of the front pillar oriented generally in the vehicle longitudinal direction. The vehicle front pillar described in Patent Document 1 is an example. This vehicle front pillar does not include overlapping flanges of the front pillar inner and outer members that project toward the center of the vehicle to receive the windshield glass. The front pillar instead has the flange of the front pillar inner member folded back to form a first front flange, and the flange of the front pillar outer member partly cut to form a second front flange in the front portion. The first and second front flanges overlap to form a closed cross section of the pillar, while the second front flange is adapted to receive the windshield glass.

### PRIOR ART DOCUMENTS

### PATENT DOCUMENTS

Patent Document 1: Japanese Patent Application Publication No. 2006-347740

### SUMMARY OF THE INVENTION

### PROBLEMS TO BE SOLVED BY THE INVENTION

The conventional front pillar described above no longer include overlapping flanges of the front pillar inner and outer members which project toward the center of the vehicle for receiving the windshield glass, but instead uses the second front flange, a front portion, of the front pillar outer member to receive the windshield glass, thereby improving driver vision.

Since the flanges of the front pillar inner and outer members that project toward the center of the vehicle have been eliminated, the bending strength of the front pillar reduces correspondingly. There is thus a need for further improved bending strength.

The present invention has been made in view of the above circumstances, and aims to provide a vehicle front pillar having improved bending resistance while improving the driver vision.

### MEANS OF SOLVING THE PROBLEM

In order to achieve the above object, one aspect of the present invention provides a front pillar of a vehicle, including: (A) a front pillar outer member which is an outer part of a vehicle body, and a roof inner reinforcement and a front pillar inner member which are inner parts of the vehicle body, the front pillar having a length oriented in the vehicle longitudinal direction and a closed cross section over the entire length, (B) wherein the front pillar outer member and the roof inner reinforcement each include an inward flange directed laterally inward in the vehicle, (C) wherein the front pillar inner member includes an outward flange directed laterally outward in the vehicle, (D) wherein the inward flange of the front pillar outer member is overlapped and joined to the outward flange of the front pillar inner member thereby forming the closed cross section of the front pillar, (E) wherein the inward flange of the roof inner reinforcement is overlapped and joined to the inward flange of the front pillar outer member, and (F) wherein at least either: the front pillar inner member includes a first ridge projecting toward the inside of the vehicle, defining a first groove open toward the outside of the vehicle, or the front pillar outer member includes a second ridge projecting toward the outside of the vehicle, defining a second groove open toward the inside of the vehicle.

### EFFECT OF THE INVENTION

The vehicle front pillar of the present invention thus configured includes the inward flange of the front pillar outer member overlapped and joined to the outward flange of the front pillar inner member, forming the closed cross section of the front pillar. This configuration allows for the width of the front pillar to be preferably reduced as compared with, for example, the case of including the inward flange extending laterally inward in the vehicle instead of the outward flange of the front pillar inner member, so that drive vision past the front pillar is improved. Furthermore, the inward flange of the roof inner reinforcement is overlapped and joined to the inward flange of the front pillar outer member. Therefore, when, for example, another part of the vehicle body such as a front header panel is joined to the overlap of the inward flange of the roof inner reinforcement and the inward flange of the front pillar outer member, the junction of the front pillar and the other part of vehicle body has an improved strength as compared with conventional pillars. The vehicle front pillar thus provides an improved driver vision, and an improved strength of the junction where the pillar is joined to the vehicle body as compared with conventional pillars.

Furthermore, the vehicle front pillar of the present invention includes at least either the first ridge formed in the front pillar inner member and projecting toward the inside of the vehicle, defining the first groove open toward the outside of the vehicle, and the second ridge formed in the front pillar outer member and projecting toward the outside of the vehicle, defining the second groove open toward the inside of the vehicle. This configuration further increases the bending strength of the front pillar due to the rigidifying effect of either the first or the second ridge.

Preferably, the front pillar inner member is positioned on the vertically lower side of the front pillar outer member. This configuration allows for the inward flange of the roof inner reinforcement and the inward flange of the front pillar outer member to be overlapped and joined together without any spacing, thereby further increasing the joint strength. When, for example, another part of the vehicle body such as a front header panel is joined to the overlap, the junction of the front pillar and the vehicle body has a further improved strength as compared with conventional pillars.

Preferably, (A) the front pillar inner member unitarily includes a front pillar inner front member on the vehicle front side and a front pillar inner rear member on the vehicle rear side, and (B) the front pillar inner front member includes an inward flange directed laterally inward in the vehicle, and (C) the front pillar inner rear member includes an outward flange directed laterally outward in the vehicle, and (D) the inward flange of the front pillar outer member is overlapped and joined to the outward flange of the front pillar inner rear member, forming the closed cross section of the front pillar, and (E) a cowl is joined to the inward flange of the front pillar inner front member. This configuration allows for the cowl to be joined to the inward flange of the front pillar inner front member that is unitarily included in the front pillar inner member, thereby preferably improving the strength of the junction of the front pillar and the cowl as compared with, for example, the case where the front pillar inner member is partly cut to unitarily form the outward flange and the inward flange, wherein the cowl is joined to the inward flange.

Preferably, (A) the roof inner reinforcement and the front pillar inner rear member have a rear overlap where they overlap in the vehicle longitudinal direction, and the inward flange of the roof inner reinforcement and the outward flange of the front pillar inner rear member are joined to the inward flange of the front pillar outer member, and (B) the front pillar inner rear member and the front pillar inner front member have a front overlap where they overlap in the vehicle longitudinal direction, and the outward flange of the front pillar inner rear member and the inward flange of the front pillar inner front member are joined to the inward flange of the front pillar outer member, thereby forming the closed cross section of the front pillar. Particularly, in the rear overlap that joins the roof inner reinforcement and the front pillar inner rear member, the front pillar outer member is overlapped and joined to the roof inner reinforcement and the front pillar inner rear member. In the front overlap that joins the front pillar inner rear member and the front pillar inner front member, the front pillar outer member is overlapped and joined to the front pillar inner rear member and the front pillar inner front member. These configurations preferably prevents reduction in the bending strength of the front pillar at the joints.

Preferably, the rear overlap includes a junction where the inward flange of the roof inner reinforcement and the inward flange of the front pillar outer member overlap, and a front header panel is joined thereto. This configuration allows for the front header panel to be joined to two frame members constituting the front pillar, namely, the roof inner reinforcement and the front pillar outer member, making it easy to obtain a sufficient strength of the junction. This effectively ensures the load distribution to the front header panel and the rigidity of the vehicle body.

### BRIEF DESCRIPTION OF THE DRAWINGS

Fig. 1 is a perspective view of a vehicle front pillar that suitably embodies the present invention.
Fig. 2 is a perspective view of the vehicle front pillar of Fig. 1 with the front pillar outer member removed.
Fig. 3 is an enlarged perspective view of the junction of the front pillar and the front header panel in the front pillar of Fig. 1.
Fig. 4 is a cross sectional view at line IV-IV of Figs. 1 and 3.
Fig. 5 is a cross sectional view at line V-V of Fig. 1.
Fig. 6 is a cross sectional view at line VI-VI of Fig. 1.

### DETAILED DESCRIPTION OF THE INVENTION

Embodiments of the present invention will be described below in detail with reference to the drawings. The figures drawn for the embodiments below are simplified and/or deformed, and therefore features are not necessarily drawn accurately with respect to their dimensional ratios and shapes.

### EMBODIMENTS

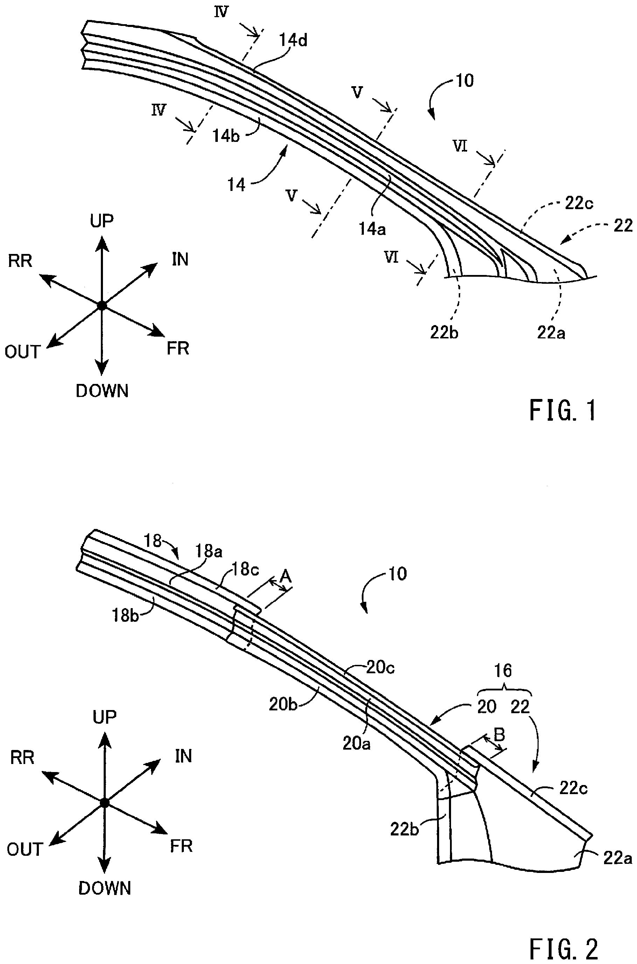

Fig. 1 is a perspective view of a front pillar 10 of a vehicle that suitably embodies the present invention. As shown in Fig. 1, the front pillar 10 is a part of a vehicle body having a length oriented in the vehicle longitudinal direction and a closed cross section over the entire length. The end on the vehicle rear side of the front pillar 10 is connected to an elongated roof side rail (not shown), which is a part of the car body, and the end on the vehicle front side of the front pillar 10 is connected to a cowl top panel (or cowl; not shown). Fig. 1 omits the other front pillar on the laterally opposite side in the vehicle, which may be configured similarly to the front pillar 10. The front pillar 10 is unitarily formed by welding together a plurality of parts each pressed from a steel sheet. In Fig. 1 and the other figures, the arrow FR indicates the forward direction in the vehicle longitudinal; the arrow RR indicates the rearward direction in the vehicle longitudinal; the arrow IN indicates the inward direction in the vehicle width; the arrow OUT indicates the outward direction in the vehicle width; the arrow UP indicates the upward direction in the vehicle vertical; and the arrow DOWN indicates the downward direction in the vehicle vertical.

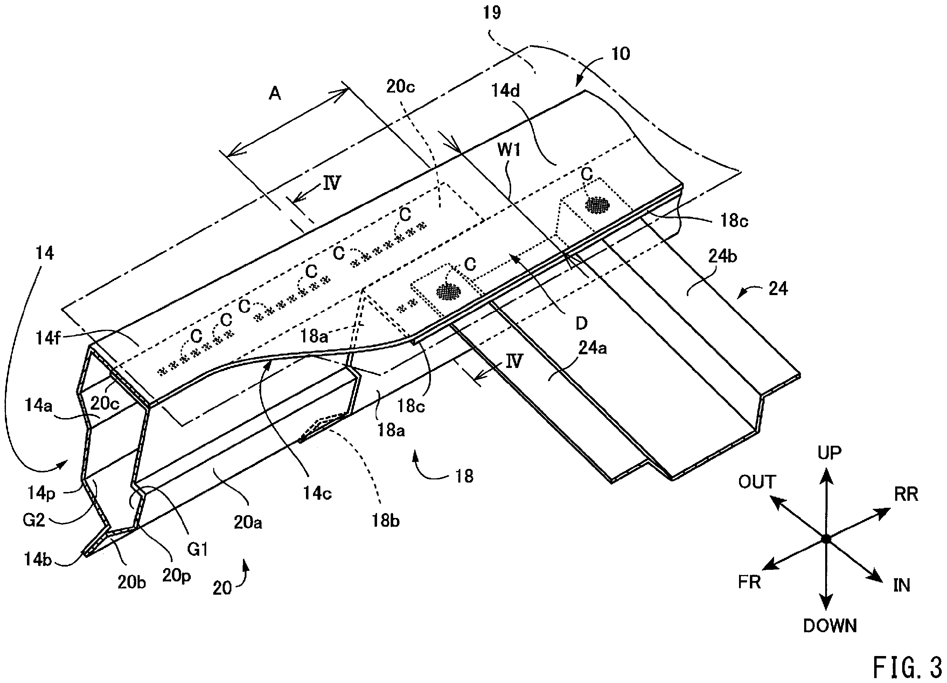

As shown in Figs. 1 to 3, the front pillar 10 includes: a front pillar outer member 14 which is an elongated frame member (an outer part of the vehicle body) in the laterally outer side of the front pillar 10 in the vehicle and extends in the vehicle longitudinal direction, a front pillar inner member 16 which is an elongated frame member (an inner part of the vehicle body) in the laterally inner side of the front pillar 10 in the vehicle and extends in the vehicle longitudinal direction, and a roof inner reinforcement 18 which is an elongated frame member (an inner part of the vehicle body) extending in the vehicle longitudinal direction continuing from the front pillar inner member 16. Fig. 2 is a perspective view of the front pillar 10 shown in Fig. 1 with the front pillar outer member 14 removed. In Fig. 3, a part of the side outer panel (also called as a side member outer) 19, constituting a vehicle body exterior along the front pillar 10, is indicated by a dot-dash line.

As shown in Fig. 2, the front pillar inner member 16 comprises: an elongated front pillar inner rear member 20 on the vehicle rear side of the front pillar inner member 16, extending in the vehicle longitudinal direction, and a front pillar inner front member 22 connected to the end on the vehicle front side of the front pillar inner rear member 20.

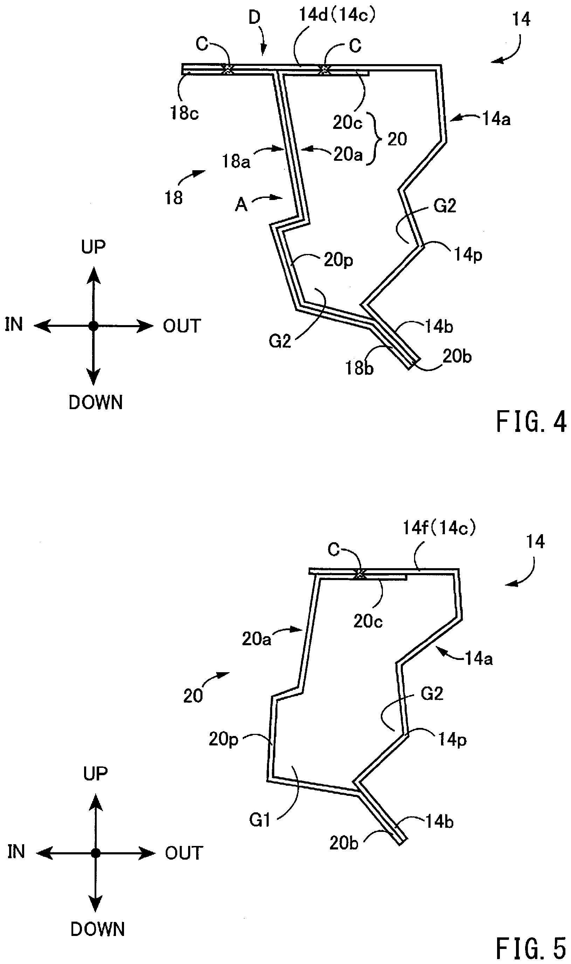

The elongated front pillar outer member 14 is formed by, for example, press working from a sheet material such as a steel sheet. As shown in Figs. 4 to 6, the front pillar outer member 14 includes: an outer wall 14a on the laterally outer side of the front pillar outer member 14 in the vehicle extending in the vehicle longitudinal direction; a planar downward flange 14b bent vertically downward in the vehicle from the vertically lower end of the outer wall 14a; and a planar inward flange 14c bent laterally inward in the vehicle from the vertically upper end of the outer wall 14a. The outer wall 14a of the front pillar outer member 14 includes a second ridge 14p extending along the length of the front pillar outer member 14 and projecting toward the outside of the vehicle, defining a second groove G2 open toward the inside of the vehicle. The second ridge 14p is for improving the bending strength of the front pillar outer member 14.

The elongated front pillar inner rear member 20 is formed from a sheet material such as a steel sheet, for example, by pressing or other forming method. As shown in Figs. 2 and 3, the front pillar inner rear member 20 unitarily includes: a sheet inner wall 20a on the laterally inner side of the front pillar inner rear member 20 in the vehicle and extending in the vehicle longitudinal direction; a planar downward flange 20b bent vertically downward in the vehicle from the vertically lower end of the inner wall 20a; and a planar outward flange 20c bent laterally outward in the vehicle from the vertically upper end of the inner wall 20a. The inner wall 20a of the front pillar inner rear member 20 includes a first ridge 20p extending along the length of the front pillar inner rear member 20 and projecting toward the inside of the vehicle to form a first groove G1 open toward the outside of the vehicle. The first ridge 20p is for improving the bending strength of the front pillar inner rear member 20.

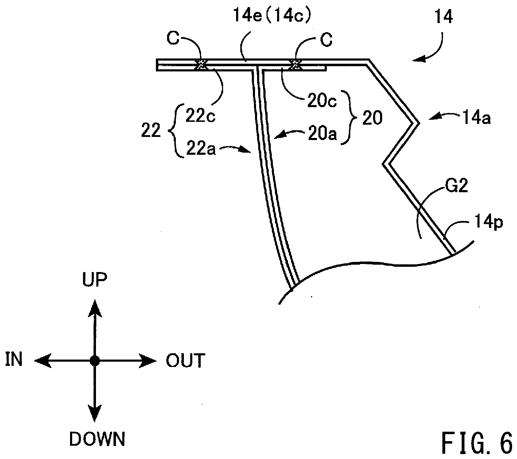

The front pillar inner front member 22 is formed from a sheet material such as a steel sheet by, for example, press working. As shown in Figs. 2 and 6, the front pillar inner front member 22 unitarily includes: a sheet wall 22a close to the inner wall 20a of the front pillar inner rear member 20; a planar downward flange 22b bent from the vertically lower end of the wall 22a so as to be close to the downward flange 20b of the front pillar inner rear member 20; and a planar inward flange 22c bent from the vertically upper end of the wall 22a toward the opposite to the outward flange 20c of the front pillar inner rear member 20, that is, laterally inward in the vehicle.

The longitudinal roof inner reinforcement 18 is made from a sheet material such as a steel sheet by, for example, press working. The roof inner reinforcement 18 unitarily includes: a sheet wall 18a close to the inner wall 20a of the front pillar inner rear member 20; a planar downward flange 18b bent from the vertically lower end of the wall 18a so as to be close to the downward flange 20b of the front pillar inner rear member 20; and a planar inward flange 18c bent from the vertically upper end of the wall 18a toward the opposite to the outward flange 20c of the front pillar inner rear member 20, that is, laterally inward in the vehicle.

As shown in Figs. 2 and 3, the roof inner reinforcement 18 and the front pillar inner rear member 20 of the front pillar 10 have a rear overlap A, where the end on the vehicle front side of the roof inner reinforcement 18 and the end on the vehicle rear side of the front pillar inner rear member 20 unitarily overlap in the vehicle longitudinal direction. In this rear overlap A, the end on the vehicle front side of the roof inner reinforcement 18 and the end on the vehicle rear side of the front pillar inner rear member 20 are resistance welded or otherwise joined together. As shown in Fig. 4, the rear overlap A is where the end on the vehicle front side of the wall 18a of the roof inner reinforcement 18 overlap the end on the vehicle rear side of the inner wall 20a of the front pillar inner rear member 20, and where the end on the vehicle front side of the downward flange 18b of the roof inner reinforcement 18 overlap the end on the vehicle rear side of the downward flange 20b of the front pillar inner rear member 20.

As shown in Fig. 2, the front pillar inner rear member 20 and the front pillar inner front member 22 of the front pillar 10 have a rear overlap B, where the end on the vehicle front side of the front pillar inner rear member 20 and the end on the vehicle rear side of the front pillar inner front member 22 unitarily overlap in the vehicle longitudinal direction. In this front overlap B, the end on the vehicle front side of the front pillar inner rear member 20 and the end on the vehicle rear side of the front pillar inner front member 22 are resistance welded or otherwise joined together. As shown in Fig. 6, the front overlap B is where the end on the vehicle front side of the inner wall 20a of the front pillar inner rear member 20 overlap the end on the vehicle rear side of the wall 22a of the front pillar inner front member 22, and where the end on the vehicle front side of the downward flange 20b of the front pillar inner rear member 20 overlap the end on the vehicle rear side of the downward flange 22b of the front pillar inner front member 22.

As shown in Figs. 1 and 3, the inward flange 14c of the front pillar outer member 14 is formed such as to cover, or lie over, the inward flange 18c of the roof inner reinforcement 18, the outward flange 20c of the front pillar inner rear member 20, and the inward flange 22c of the front pillar inner front member 22. The inward flange 14c of the front pillar outer member 14 unitarily includes: a first wider section 14d having a larger width W1, as measured in the vehicle width direction, such as to lie over the inward flange 18c of the roof inner reinforcement 18 and the outward flange 20c of the front pillar inner rear member 20 in the rear overlap A; a second wider section 14e having the larger width W1 such as to lie over the inward flange 22c of the front pillar inner front member 22 and the outward flange 20c of the front pillar inner rear member 20 in the front overlap B; a narrower section 14f having a smaller width than the width W1 of the first wider section 14d and the second wider section 14e, and connecting between the first wider section 14d and the second wider section 14e.

In the end on the vehicle rear side, or rear overlap A, of the elongated front pillar 10, the inward flange 18c of the roof inner reinforcement 18 and the outward flange 20c of the front pillar inner rear member 20, are resistance welded or otherwise joined to the first wider section 14d of the inward flange 14c of the front pillar outer member 14, forming a closed cross section of the pillar, as shown in Fig. 6, defined by the front pillar outer member 14, the front pillar inner rear member 20, and the roof inner reinforcement 18. In the end on the vehicle front side, or front overlap B, of the elongated front pillar 10, the outward flange 20c of the front pillar inner rear member 20 and the inward flange 22c of the front pillar inner front member 22 are resistance welded or otherwise joined to the second wider section 14e of the inward flange 14c of the front pillar outer member 14, forming a closed cross section of the pillar, as shown in Fig. 6, defined by the front pillar outer member 14, the front pillar inner rear member 20, and the front pillar inner front member 22. In the middle section of the elongated front pillar 10, the narrower section 14f of the inward flange 14c of the front pillar outer member 14 and the outward flange 20c of the front pillar inner rear member 20 are overlapped and resistance welded or otherwise joined together, forming a closed cross section of the pillar, as shown in Fig. 5, defined by the front pillar outer member 14 and the front pillar inner rear member 20. The downward flange 14b of the front pillar outer member 14 and the downward flange 20b of the front pillar inner rear member 20 are overlapped and resistance welded or otherwise joined together. As a result, the elongated front pillar 10 has a closed cross section formed in its entire length by the front pillar outer member 14, the front pillar inner rear member 20, the front pillar inner front member 22, and the roof inner reinforcement 18. Figs. 3 to 6 shows the welding trace C in the front pillar 10 caused by the resistance welding used for joining the front pillar outer member 14, the front pillar inner rear member 20, the front pillar inner front member 22, and the roof inner reinforcement 18. A cowl top panel (not shown) is resistance welded or otherwise joined to the inward flange 22c of the front pillar inner front member 22 at the end on the vehicle front side of the front pillar 10.

As shown in Fig. 3, the end on the vehicle rear side, or rear overlap A, of the front pillar 10 includes a junction D where the inward flange 18c of the roof inner reinforcement 18 and overlap the first wider section 14d of the inward flange 14c of the front pillar outer member 14, and an elongated front header panel 24 is joined thereto. In this junction D, the inward flange 18c of the roof inner reinforcement 18 and the first wider section 14d of the inward flange 14c of the front pillar outer member 14 are overlapped and resistance welded or otherwise joined together. The elongated front header panel 24 connects between the front pillar 10 and the other front pillar on the laterally opposite side in the vehicle, which may be configured similarly to the front pillar 10. The front header panel 24 receives the upper edge of a windshield (not shown).

As shown in Fig. 3, the front header panel 24 may include an elongated planar front side flange 24a on the vehicle front side of the front header panel 24, an elongated planar rear side flange 24b on the vehicle rear side of the front header panel 24. The laterally outer ends of the front side flange 24a and the rear side flange 24b are both resistance welded or otherwise joined in the junction D to the front pillar 10.

As described above, the front pillar 10 in the embodiments above particularly includes: the inward flange 14c of the front pillar outer member 14 and the outward flange 20c of the front pillar inner rear member 20 of the front pillar inner member 16, are overlapped and joined together, forming a closed cross section of the front pillar. This configuration allows for the width of the front pillar 10 to be made narrower to improve driver vision past the front pillar 10 than when including an inward flange directed laterally inward in the vehicle instead of the outward flange of the front pillar inner member. Furthermore, the inward flange 18c of the roof inner reinforcement 18 is overlapped and joined to the inward flange 14c of the front pillar outer member 14. Therefore, when, for example, another part of the vehicle body such as a front header panel 24 is joined to the overlap of the inward flange 18c of the roof inner reinforcement 18 and the inward flange 14c of the front pillar outer member 14, the strength of the junction of the front pillar 10 and the other part of the vehicle body is improved as compared with conventional pillars. The front pillar 10 thus provides an improved driver vision and an improved strength of the junction where the pillar is connected to the vehicle body, as compared with conventional pillars.

The front pillar 10 in the embodiments above particularly includes: the first pillar outer member 14 includes the first ridge 20p projecting toward the inside of the vehicle to form a first groove open toward the outside of the vehicle, and the front pillar inner member 16 (including the front pillar inner rear member 20 and the front pillar inner front member 22) includes the second ridge 14p projecting toward the outside of the vehicle to form a second groove open toward the inside of the vehicle, This configuration further increases the bending strength of the front pillar 10 due to the rigidifying effect of the first ridge 20p and the second ridge 14p.

The front pillar 10 in the embodiments above particularly includes: the front pillar inner member 16 (including the front pillar inner rear member 20 and the front pillar inner front member 22) positioned on the vertically lower side of the front pillar outer member 14. As shown in Figs. 3 to 6, the outward flange 20c of the front pillar inner rear member 20 is positioned below the inward flange 14c of the front pillar outer member 14, and the downward flange 20b of the front pillar inner rear member 20 is positioned below the downward flange 14b of the front pillar outer member 14. This configuration allows for the inward flange 18c of the roof inner reinforcement 18 and the inward flange 14c of the front pillar outer member 14 to be overlapped and joined together without any spacing, thereby further increasing the joint strength. When, for example, another part of the vehicle body such as a front header panel 24 is joined to the overlap, the strength of the junction of the front pillar and the other part of the vehicle body is further improved as compared with conventional pillars.

The front pillar 10 in the embodiment above particularly includes: the front pillar inner member 16 that unitarily comprises a front pillar inner front member 22 on the vehicle front side and a front pillar inner rear member 20 on the vehicle rear side, wherein the front pillar inner front member 22 includes an inward flange 22c directed laterally inward in the vehicle, the front pillar inner rear member 20 includes an outward flange 20c directed laterally outward in the vehicle, and wherein the outward flange 20c of the front pillar inner rear member 20 is overlapped and joined to the inward flange 14c of the front pillar outer member 14, forming the closed cross section of the front pillar 10, and wherein a cowl top panel (not shown) is joined to the inward flange 22c of the front pillar inner front member 22. Therefore, the cowl top panel (not shown) is joined to the inward flange 22c of the front pillar inner front member 22 that is unitarily included in the front pillar inner member 16. This configuration preferably improves the strength of the junction of the front pillar 10 and the cowl top panel (not shown) as compared with, for example, the case where the front pillar inner member 16 is partly cut to unitarily form outward and inward flanges to join the cowl top panel to the inward flange.

The front pillar 10 in the embodiment above particularly includes: the roof inner reinforcement 18 and the front pillar inner rear member 20 that have a rear overlap A where they overlap in the vehicle longitudinal direction, and inside flange 18c of the roof inner reinforcement 18 and inside flange 14c of the front pillar outer member 14 are joined to the outward flange 20c of the front pillar inner rear member 20; and the front pillar inner rear member 20 and the front pillar inner front member 22 that have a front overlap B where they overlap in the vehicle longitudinal direction, and the inward flange 22c of the front pillar inner front member 22 the outward flange 20c of the front pillar inner rear member 20 are joined to the inside flange 14c of the front pillar outer member 14, thereby forming the closed cross section of the pillar. Therefore, in the rear overlap A joining the roof inner reinforcement 18 and the front pillar inner rear member 20, the front pillar outer member 14, is overlapped and joined to the roof inner reinforcement 18 and the front pillar inner rear member 20, while in the front overlap B joining the front pillar inner rear member 20 and the front pillar inner front member 22, the front pillar outer member 14, is overlapped and joined to the front pillar inner rear member 20 and the front pillar inner front member 22. This configuration preferably prevents reduction in the bending strength of the connecting portion of the front pillar 10.

The front pillar 10 in the embodiment above particularly includes the rear overlap A that includes a junction D where the inward flange 18c of the roof inner reinforcement 18 and the inward flange 14c of the front pillar outer member 14 overlap, and the front header panel 24 is joined thereto. Since the front header panel 24 is thus joined to two frame members constituting the front pillar 10, namely, the roof inner reinforcement 18 and the front pillar outer member 14, it is easy to obtain the strength of the junction. This effectively ensures the load distribution to the front header panel 24 and the rigidity of the vehicle body.

Although embodiments of the present invention have been described in detail with reference to the drawings, the invention can be implemented in various modifications and improvements based on knowledge of those skilled in the art.

For example, the front pillar 10 has been described in the embodiments above as including: the front pillar outer member 14 that includes the first ridge 20p projecting toward the inside of the vehicle, defining a first groove open toward the outside of the vehicle; and the front pillar inner member 16 (including the front pillar inner rear member 20 and the front pillar inner front member 22) that includes the second ridge 14p projecting toward the outside of the vehicle, defining a second groove open toward the inside of the vehicle. However, it is not necessary to include both the first ridge 20p and the second ridge 14p. Either one of the first ridge 20p and the second ridge 14p may have an effect of improving the bending strength. In short, at least one of the first ridge 20p and the second ridge 14p may be included.

### DESCRIPTION OF REFERENCE NUMERALS

10: Front pillar of a vehicle
14: Front pillar outer member
14c: Inward flange
14p: Second ridge
16: Front pillar inner member
18: Roof inner reinforcement
18c: Inward flange
20: Front pillar inner rear member
20c: Outward flange
20p: First ridge
22: Front pillar inner front member
22c: Inward flange
24: Front header panel
A: Rear overlap
B: Front overlap
C: Weld mark
G1: First groove
G2: Second groove

## Claims

1. A front pillar of a vehicle, comprising:
a front pillar outer member which is an outer part of a vehicle body, and a roof inner reinforcement and a front pillar inner member which are inner parts of the vehicle body, the front pillar having a length oriented in the vehicle longitudinal direction and closed cross sections over the entire length,
**characterized in that**
the front pillar outer member and the roof inner reinforcement each include an inward flange directed laterally inward in the vehicle, and
the front pillar inner member includes an outward flange directed laterally outward in the vehicle,
wherein the inward flange of the front pillar outer member is overlapped and joined to the outward flange of the front pillar inner member, thereby forming a closed cross section of the front pillar,
wherein the inward flange of the roof inner reinforcement is overlapped and joined to the inward flange of the front pillar outer member, and
wherein at least either:
the front pillar inner member includes a first ridge projecting toward the inside of the vehicle, defining a first groove open toward the outside of the vehicle, or
the front pillar outer member includes a second ridge projecting toward the outside of the vehicle, defining a second groove open toward the inside of the vehicle.

2. The front pillar of claim 1, **characterized in that**:
the front pillar inner member is positioned on the vertically lower side of the front pillar outer member.

3. The front pillar of claim 1 or 2, **characterized in that**:
the front pillar inner member unitarily comprises a front pillar inner front member on the vehicle front side and a front pillar inner rear member on the vehicle rear side,
wherein the front pillar inner front member includes an inward flange directed laterally inward in the vehicle, and
wherein the front pillar inner rear member includes an outward flange directed laterally outward in the vehicle, and
wherein the inward flange of the front pillar outer member is overlapped and joined to the outward flange of the front pillar inner rear member, thereby forming a closed cross section of the front pillar, and
wherein a cowl is joined to the inward flange of the front pillar inner front member.

4. The front pillar of claim 3, **characterized in that**:
the roof inner reinforcement and the front pillar inner rear member have a rear overlap where they overlap in the vehicle longitudinal direction, and the inward flange of the roof inner reinforcement and the outward flange of the front pillar inner rear member are joined to the inward flange of the front pillar outer member, and
the front pillar inner rear member and the front pillar inner front member have a front overlap where they overlap in the vehicle longitudinal direction, and the outward flange of the front pillar inner rear member and the inward flange of the front pillar inner front member are joined to the inward flange of the front pillar outer member,
thereby forming the closed cross section of the front pillar.

5. The front pillar of any one of claims 1 to 4, **characterized in that**:
the rear overlap includes a junction where the inward flange of the roof inner reinforcement and the inward flange of the front pillar outer member overlap, and a front header panel is joined thereto.
